# EUROPEAN PATENT APPLICATION

(11) **EP 4 220 378 A1**
(43) Date of publication of application: **02.08.2023**
(21) Application number: 21884944.6
(22) Date of filing: 14.10.2021
(51) Int. Cl.: G06F 3/14

(54) **SCREEN PROJECTION METHOD AND ELECTRONIC DEVICE**

(30) Priority: 31.10.2020 CN 202011198517
(71) Applicant: Huawei Technologies Co., Ltd., Shenzhen, Guangdong 518129 (CN)
(72) Inventor: CHENG, Yiyi, Shenzhen, Guangdong 518129 (CN); LIU, Chang, Shenzhen, Guangdong 518129 (CN); ZHOU, Liang, Shenzhen, Guangdong 518129 (CN)
(74) Representative: Maiwald GmbH
(86) International application number: PCT/CN2021/123795
(87) International publication number: WO 2022/089215

(57) **Abstract**

This application discloses a screen projection method and an electronic device, and relates to the field of electronic device technologies. The method is applied to a first electronic device. The first electronic device includes a first display screen. The method specifically includes: The first electronic device displays a first interface on the first display screen; the first electronic device receives a first operation of projection to a second electronic device; and the first electronic device sends, in response to the first operation, the first interface obtained after a display style is adjusted to the second electronic device, where the first interface obtained after the display style is adjusted is determined based on display screen information of a second display screen of the second electronic device. Therefore, in this technical solution, a display style of an interface can be adjusted based on the display screen information of the second electronic device, so as to ensure that a screen projection interface is adapted to electronic devices with different display screen sizes for display, and improve viewing and operating experience of a user.

## Description

### CROSS-REFERENCE TO RELATED APPLICATIONS

This application claims priority to Chinese Patent Application No. 202011198517.8, filed with the China National Intellectual Property Administration on October 31, 2020 and entitled "SCREEN PROJECTION METHOD AND ELECTRONIC DEVICE", which is incorporated herein by reference in its entirety.

### TECHNICAL FIELD

This application relates to the field of electronic device technologies, and in particular, to a screen projection method and an electronic device.

### BACKGROUND

With development of intelligent terminals, there are more scenarios in which one user owns a plurality of intelligent terminals, for example, devices such as a smartphone (or referred to as a mobile phone), a tablet computer (PAD, or referred to as a tablet), and a personal computer (PC, or referred to as a computer). Interconnection between a plurality of devices brings better user experience.

Currently, to improve user experience, a multi-screen collaboration (or referred to as multi-device collaboration) function is provided. With the multi-screen collaboration function, a first electronic device may perform projection to a second electronic device, a display screen of the first electronic device displays a real window, and a display screen of the second electronic device displays a mirror image of the first electronic device, that is, a virtual window. A user may perform an operation in both the real window of the first electronic device and the virtual window of the second electronic device.

Compared with the mobile phone, the tablet or the computer has a larger display screen size. Consequently, display screen size adaptation cannot be implemented during direct screen projection. Therefore, a display effect of the virtual window is a key experience point in a multi-screen collaboration scenario during screen projection.

This application provides a screen projection method and an electronic device, so as to adapt to a screen projection scenario of electronic devices with different display screen sizes, and improve viewing and operating experience of a user.

According to a first aspect, an embodiment of this application provides a screen projection method. The method is applied to a first electronic device. The first electronic device includes a first display screen. The method includes: The first electronic device displays a first interface on the first display screen; the first electronic device receives a first operation, where the first operation is used to indicate to project the first interface to a second electronic device for display; the first electronic device adjusts a display style of the first interface based on display screen information of a second display screen of the second electronic device in response to the first operation; and the first electronic device sends the first interface obtained after the display style is adjusted to the second electronic device for display. Because the display style of the first interface is adjusted based on the display screen information of the second display screen of the second electronic device, a projected first interface can be adapted to electronic devices with different display screen sizes, so as to help improve viewing and operating experience of a user.

In a possible design, the display screen information of the second display screen includes at least one of the following: size information of the second display screen, resolution of the second display screen, and a landscape/portrait attribute of the second display screen. For example, the size information of the second display screen and the resolution of the second display screen are used to adjust a page layout of a screen projection interface, and the landscape/portrait attribute of the second display screen is used to adjust a display direction of the screen projection interface.

In a possible design, the first interface obtained after the display style is adjusted is a first interface obtained after a display page layout and/or the display direction are/is adjusted.

In a possible design, in a process in which the first electronic device adjusts the display style of the first interface based on the display screen information of the second display screen of the second electronic device, the first electronic device determines a first display style of the second electronic device in full screen display based on the display screen information of the second display screen, and the first electronic device adjusts the first interface based on the first display style.

In a possible design, in a process in which the first electronic device determines the first display style of the second electronic device in full screen display based on the display screen information of the second display screen, the first electronic device determines the first display style of the second electronic device in full screen display based on the display screen information of the second display screen and a landscape/portrait attribute of an electronic device collecting an audio/video. The landscape/portrait attribute of the electronic device collecting an audio/video is considered, so that the display direction of the first interface is further adjusted based on the landscape/portrait attribute of the electronic device collecting an audio/video. This improves viewing experience of the user.

In a possible design, when the second electronic device is in landscape, in a process in which the first electronic device determines the first display style of the second electronic device in full screen display based on the display screen information of the second display screen and the landscape/portrait attribute of the electronic device collecting an audio/video, there may be the following adjustment manners:
if the electronic device collecting an audio/video is the first electronic device and the first electronic device is in portrait, rotating the display direction of the first interface clockwise by a first angle, and adjusting resolution of the first interface based on a size and the resolution that are of the second display screen;
if the electronic device collecting an audio/video is the first electronic device and the first electronic device is in landscape, adjusting the resolution of the first interface based on the size and the resolution that are of the second display screen; or
if the electronic device collecting an audio/video is the second electronic device, adjusting the resolution of the first interface based on the size and the resolution that are of the second display screen.

In a possible design, the first electronic device may further determine a second display style of the first electronic device in display based on the landscape/portrait attribute of the electronic device collecting an audio/video, and the first electronic device adjusts the first interface based on the second display style.

In a possible design, when the second electronic device is in landscape, in a process in which the first electronic device determines the second display style of the first electronic device in display based on the landscape/portrait attribute of the electronic device collecting an audio/video, there may be the following adjustment manners:
if the electronic device collecting a video is the second electronic device and the first electronic device is in portrait, rotating the display direction of the first interface anticlockwise by a second angle;
if the electronic device collecting a video is the second electronic device and the first electronic device is in landscape, keeping a current display style of the first interface unchanged; or
if the electronic device collecting a video is the first electronic device and the first electronic device is in landscape or portrait, keeping a current display style of the first interface unchanged.

According to a second aspect, an embodiment of this application provides a screen projection method. The method is applied to a second electronic device. The second electronic device includes a second display screen. The method includes: The second electronic device receives and displays a first interface, where the first interface is obtained by a first electronic device by adjusting, based on display screen information of the second display screen of the second electronic device, an interface displayed on a first display screen of the first electronic device; the second electronic device receives a second operation, where the second operation is used to indicate the second electronic device to perform full screen display; and the second electronic device adjusts the first interface for full screen display in response to the second operation. Because a display style of the first interface is adjusted based on the display screen information of the second display screen of the second electronic device, a projected first interface can be adapted to electronic devices with different display screen sizes, so as to help improve viewing and operating experience of a user.

In a possible design, before the second electronic device receives and displays the first interface, the second electronic device may further obtain the display screen information of the second display screen, and the second electronic device sends the display screen information of the second display screen to the first electronic device.

According to a third aspect, an embodiment of this application provides an electronic device, including at least one display screen and one or more processors. At least one processor is coupled to at least one memory, and one or more computer programs are stored in the memory. When the computer program is executed by the processor, the electronic device is enabled to implement the method according to any one of the possible designs in the first aspect or the second aspect.

According to a fourth aspect, an embodiment of this application provides a chip. The chip is coupled to a memory in an electronic device, so that the chip invokes, during running, a computer program stored in the memory, to implement the method according to any one of the possible designs in the first aspect or the second aspect of the embodiments of this application.

According to a fifth aspect, an embodiment of this application provides a computer storage medium. The computer storage medium stores a computer program. When the computer program is run on an electronic device, the electronic device is enabled to perform the method according to any one of the possible designs in the first aspect or the second aspect.

According to a sixth aspect, an embodiment of this application provides a computer program product. When the computer program product runs on an electronic device, the electronic device is enabled to perform the method according to any one of the possible designs in the first aspect or the second aspect.

According to a seventh aspect, an embodiment of this application provides an electronic device, including a processor and an interface circuit. The interface circuit is configured to receive code instructions and transmit the code instructions to the processor. The processor is configured to run the code instructions to perform the method according to any one of the possible designs in the first aspect or the second aspect.

According to an eighth aspect, an embodiment of this application provides a screen projection system, including a first electronic device performing the method according to the first aspect and a second electronic device performing the method according to the second aspect. The first electronic device and the second electronic device may perform multi-screen collaboration with each other.

For a technical effect that can be achieved by any one of the third aspect to the eighth aspect and any one of the possible designs in the third aspect to the eighth aspect, refer to descriptions of technical effects that can be achieved by the first aspect and the second aspect. Details are not described herein again.

### BRIEF DESCRIPTION OF DRAWINGS

FIG. 1 is a schematic diagram of a hardware structure of an electronic device according to an embodiment of this application;
FIG. 2, FIG. 3, FIG. 4, FIG. 5, and FIG. 6(a) to FIG. 6(c) are schematic diagrams of user interfaces according to an embodiment of this application;
FIG. 7 is a schematic diagram of an architecture of a screen projection system according to an embodiment of this application;
FIG. 8 is a schematic diagram of a screen projection procedure according to an embodiment of this application;
FIG. 9, FIG. 10, FIG. 11, FIG. 12, FIG. 13, and FIG. 14 are schematic diagrams of application display directions according to an embodiment of this application;
FIG. 15 and FIG. 16 are schematic flowcharts of screen projection methods according to an embodiment of this application; and
FIG. 17 and FIG. 18 are schematic diagrams of structures of electronic devices according to an embodiment of this application.

### DESCRIPTION OF EMBODIMENTS

To adapt to window display of screens in different sizes in a multi-screen collaboration function and achieve a better display result, this application provides a screen projection method. The method and an electronic device are based on a same technical concept. Because a problem-resolving principle of the method is similar to that of the electronic device, mutual reference may be made to embodiments of the electronic device and the method, and no repeated description is provided.

A service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

The following describes some terms in embodiments of this application, to facilitate understanding of a person skilled in the art.

(1) Multi-screen collaboration, also referred to as multi-device collaboration, is a distributed technology, which can implement cross-system and cross-device collaboration. After a mobile phone is connected to a tablet or a computer, resource sharing and a collaborative operation can be implemented, greatly facilitating sharing and improving working efficiency. Devices using a multi-screen collaboration function may be connected to a same local area network, or may be connected to each other by using a near field communication (near field communication, NFC) technology, or the like.

For example, in multi-screen collaboration, a first electronic device may be projected to a second electronic device, and a file on the first electronic device may be viewed and opened on the second electronic device. The first electronic device displays a real window (or a real interface), and the second electronic device displays a mirror image of the first electronic device. The mirror image of the first electronic device displayed on the second electronic device may be understood as a virtual window (or a virtual interface or a screen projection interface).

With rapid development of intelligent terminals, a requirement for working in multi-device collaboration rapidly emerges, and a use scenario of multi-screen collaboration increasingly appears in people's life. A conventional multi-screen collaboration function supports screen projection of the mobile phone to the tablet or the computer. Compared with the mobile phone, the tablet or the computer is a large screen device. Therefore, in this embodiment of this application, the tablet or the computer is also referred to as a large screen device or a large screen side, and the mobile phone or the like is referred to as a small screen device or a small screen side. In the conventional multi-screen collaboration function, after a screen projection connection is successful, a user can perform an operation on either the small screen side or the large screen side, and can choose to use an audio/video collection capability on the small screen side or the large screen side, that is, choose to use the small screen side or the large screen side to collect an audio/video. The virtual window on the small screen side is displayed on the large screen side. A size of the virtual window is the same as that of the real window on the small screen side, and displayed content is the same as that on the small screen side.

(2) Electronic device, where embodiments of this application may be applied to the electronic device. The electronic device in the embodiment of this application may be a terminal. For example, the terminal may be a portable electronic device, for example, a mobile phone, a tablet computer, a wearable device (for example, a smartwatch) with a wireless communication function, or a vehicle-mounted device. An example embodiment of the portable electronic device includes but is not limited to a portable electronic device using iOS^{®}, Android^{®}, Microsoft^{®}, or another operating system.

More specifically, the electronic device may include a small screen device such as a mobile phone, or may include a large screen device such as a tablet or a computer.

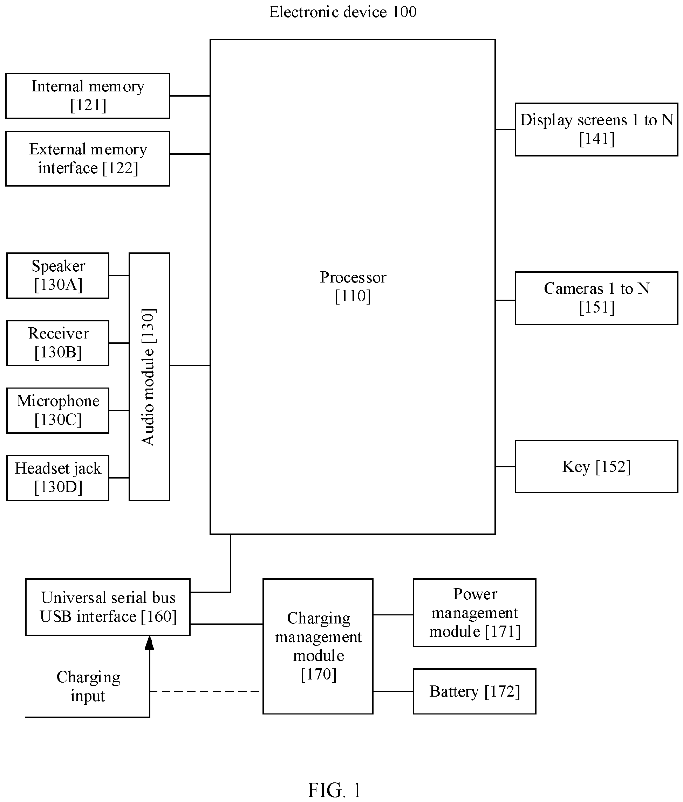

For example, FIG. 1 is a schematic diagram of a hardware structure of an electronic device according to an embodiment of this application. Specifically, an electronic device 100 may include a processor 110, an internal memory 121, an external memory interface 122, an audio module 130, a speaker 130A, a receiver 130B, a microphone 130C, a headset jack 130D, a display screen 141, a camera 151, a key 152, a universal serial bus (universal serial bus, USB) interface 160, a charging management module 170, a power management module 171, and a battery 172. In some other embodiments, the electronic device 100 may further include an indicator.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

In embodiments of this application, the processor may store one or more applications, and determine a full screen display style of a display screen based on obtained display screen information, and the display screen information includes at least size information of the display screen, to ensure that full screen display of display screens in different sizes can be adapted during multi-screen collaboration. Alternatively, the processor may further obtain the display screen information, and control, based on the full screen display style of the display screen, the display screen 141 to display the virtual window.

In some embodiments, a memory may be further disposed in the processor 110, and is configured to store instructions and data.

The internal memory 121 may be configured to store computer-executable program code. The executable program code includes instructions. The processor 110 runs the instructions stored in the internal memory 121, to perform various function applications and data processing of the electronic device. The internal memory 121 may include a program storage area and a data storage area. The program storage area may store an operating system, an application required by at least one function (for example, a sound playing function or an image collection function), and the like. The data storage area may store data (for example, audio data, a phone book, or a parameter required for photographing) or the like created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS).

The external memory interface 122 may be configured to connect to an external memory card (for example, a Micro SD card), to extend a storage capability of the electronic device 100.

The electronic device 100 may implement an audio function, for example, music playing and recording, by using the audio module 130, the speaker 130A, the receiver 130B, the microphone 130C, the headset jack 130D, the application processor, and the like.

The electronic device 100 may implement a display function by using the GPU, the display screen 141, the application processor, and the like. The GPU is a microprocessor for image processing, and connects the display screen 141 and the application processor. The GPU is configured to perform mathematical and geometric computation, and render an image. The processor 110 may include one or more GPUs, which execute program instructions to generate or change display information.

The display screen 141 may be configured to display an image, a video, and the like. The display screen 141 may include a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), or the like. In some embodiments, the electronic device 100 may include one or N display screens 141, where N is a positive integer greater than 1.

In this embodiment of this application, the display screen 141 may display a real window or a virtual window. A display style displayed by the display screen 141 when displaying the real window or the virtual window is determined based on display screen information of the display screen 141. The display screen information includes but is not limited to at least one of the following information: size information of the display screen 141, resolution of the display screen 141, or a landscape/portrait attribute of the display screen 141. The size information of the display screen 141 is a size of a display window in full screen display. The resolution of the display screen 141 is a maximum resolution supported by the display screen 141. The landscape/portrait attribute of the display screen 141 is used to indicate whether the display screen 141 is currently displayed in landscape or portrait.

For example, if the first electronic device is projected to the second electronic device, a processor of the first electronic device may obtain first display screen information of a first display screen of the first electronic device, and a processor of the second electronic device may obtain second display screen information of a second display screen of the second electronic device.

The electronic device 100 may further implement a shooting function by using the ISP, the camera 151, the video codec, the GPU, the display screen 141, the application processor, and the like.

The ISP may be configured to process data fed back by the camera 151. For example, during photographing, a shutter is pressed, and light is transmitted to a camera photosensitive element through a lens. An optical signal is converted into an electrical signal, and the camera photosensitive element transmits the electrical signal to the ISP for processing, to convert the electrical signal into an image visible to a naked eye. In some embodiments, the ISP may be disposed in the camera 151.

The camera 151 may be configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in a format such as RGB or YUV. In some embodiments, the electronic device 100 may include one or N cameras 151, where N is a positive integer greater than 1.

In some embodiments, the camera 151 further includes a visible light camera. The visible light camera may collect a visible light image, for example, the visible light image includes a color image.

The key 152 may include a power key, a volume key, and the like. The key 152 may be a mechanical key or a touch key. The electronic device 100 may receive a key input, and generate a key signal input related to a user setting and function control of the electronic device 100.

In some other embodiments, the processor 110 may alternatively include one or more interfaces. For example, the interface may be a SIM card interface. For another example, the interface may alternatively be a USB interface 160. It can be understood that, in this embodiment of this application, different modules of the electronic device 100 may be connected through an interface, so that the electronic device 100 can implement different functions. It should be noted that a connection manner of the interface in the electronic device 100 is not limited in the embodiments of this application.

The USB interface 160 is an interface that complies with a USB standard specification. For example, the USB interface 160 may include a mini USB interface, a micro USB interface, a USB Type C interface, or the like. The USB interface 160 may be configured to connect to a charger to charge the electronic device 100, may be configured to transmit data between the electronic device 100 and a peripheral device, or may be configured to connect to a headset for playing audio through the headset. The USB interface 160 may be further configured to connect to another electronic device.

The charging management module 170 is configured to receive a charging input from a charger. The charger may be a wireless charger or a wired charger. In some embodiments of wired charging, the charging management module 170 may receive a charging input of the wired charger by using the USB interface 160. In some embodiments of wireless charging, the charging management module 170 may receive a wireless charging input by using a wireless charging coil of the electronic device 100. The charging management module 170 may supply power for the electronic device 100 by using the power management module 171 while charging the battery 172.

The power management module 171 is configured to connect the battery 172, the charging management module 170, and the processor 110. The power management module 171 receives an input of the battery 172 and/or the charging management module 170, and supplies power to the processor 110, the internal memory 121, the external memory 122, the display screen 141, the camera 151, and the like. The power management module 171 may be further configured to monitor parameters such as a battery capacity, a cycle count of a battery, and a battery health state (leakage and impedance). In some other embodiments, the power management module 171 may alternatively be disposed in the processor 110. In some other embodiments, the power management module 171 and the charging management module 170 may be further disposed in a same device.

It should be understood that the hardware structure of the electronic device 100 shown in FIG. 1 is merely an example. The electronic device 100 in this embodiment of this application may have more or fewer components than those shown in the figure, two or more components may be combined, or there may be a different component layout. Components shown in the figure may be implemented in hardware, software, or a combination of hardware and software including one or more signal processing and/or application-specific integrated circuits.

In addition, it should be understood that the electronic device 100 in this embodiment of this application may implement different functions by installing different applications. The application may be a native

(native) application, for example, a setting, a phone, or a camera, or may be a third-party application downloaded from an application store, for example, WeChat^{®}.

(3) A virtual window is a shadow-projection window displayed on a display screen of a second electronic device when a first electronic device is projected to the second electronic device. In this embodiment of this application, associate assistant (associate assistant, AA) virtual display (Virtual Display) may be used to create, manage, and refresh a display style of the virtual window, to adapt to display screens in different sizes.

A real window is a window displayed on a display screen of the first electronic device when the first electronic device is projected to the second electronic device. In this embodiment of this application, a window manager service (window manager service, WMS), and/or a display manager service (display manager service, DMS), and/or an application manager service (activity manager service, AMS) may be used to create, manage, and refresh the display style of the real window.

When a screen projection connection is successful, the user may view and perform an operation on the real window by using the first electronic device, or may view and perform an operation on the virtual window by using the second electronic device, and an operation result on one side is synchronously displayed on the other side in real time.

(4) An application (application, app) is a software program that can implement one or more specific functions. Usually, a plurality of applications may be installed in the electronic device, for example, a camera application, an SMS application, an image application, various mailbox applications, instant messaging software, or a video application. The application mentioned in the following may be an application installed when the electronic device is delivered from a factory, or may be an application downloaded by the user from a network or obtained from the another electronic device in a process of using the electronic device (for example, an application sent by another electronic device).

In embodiments of this application, "at least one" means one or more, and "a plurality of" means two or more. The term "and/or" describes an association relationship for describing associated objects and represents that three relationships may exist. For example, A and/or B may represent the following three cases: Only A exists, both A and B exist, and only B exists. A and B each may be singular or plural. The character "/" usually indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may indicate a singular or plural form.

In addition, unless otherwise stated, in embodiments of this application, ordinal numbers such as "first" and "second" are intended to distinguish between a plurality of objects, but are not intended to limit sizes, content, orders, time sequences, priorities, importance, or the like of the plurality of objects. For example, a second file and a second file are merely used to distinguish between different files, but do not indicate different sizes, content, priorities, importance, or the like of the two files.

To better understand the technical solutions provided in the embodiments of this application, the following first briefly describes a display process of multi-screen collaboration in a related technology.

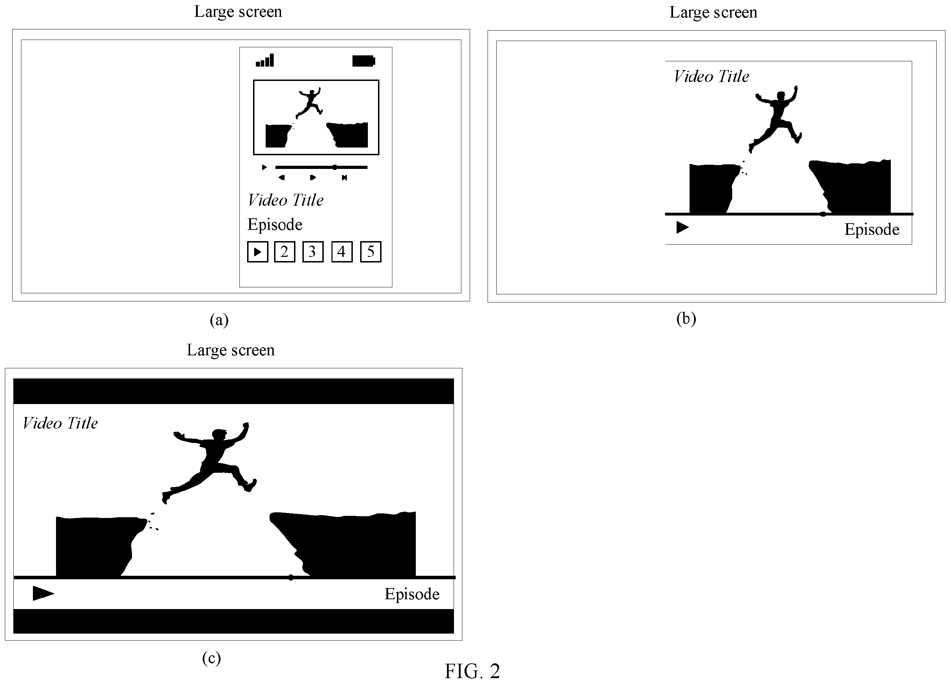

In the related technology, when a small screen side is projected to a large screen side, a virtual window is created and displayed on the large screen side based on a size of a real window on the small screen side. A user performs an operation on the virtual window on the large screen side or directly performs an operation on the real window on the small screen side, which can be synchronized to the other side in real time. As shown in (a) in FIG. 2, a size and a proportion that are of the virtual window displayed on the large screen side are consistent with those of the real window displayed on the small screen side.

In the related technology, full screen display is supported only in a few cases. For example, for an application supporting landscape display, when the small screen side rotates, under this type of application, to display in landscape, as shown in (b) in FIG. 2, the virtual window on the large screen side also rotates, with the small screen side, to display in landscape. In some possible scenarios, a full screen button is further disposed in the virtual window on the large screen side. The user may tap the full screen button to implement full screen display of the virtual window on the large screen side, as shown in (c) in FIG. 2.

However, as shown in (c) in FIG. 2, in full screen display, the proportion of the real window on the small screen side remains unchanged, and the virtual window on the large screen side is zoomed in proportionally. A video playback window is used as an example. There are black borders on the top, bottom, left, and right of the video playback window, and a screen on the large screen side is not fully covered. In addition, fonts and buttons are zoomed in accordingly, which do not adapt to resolution on the large screen side. Consequently, viewing and operating experience of the user is poor. In addition, as the size of the large screen side increases, user experience is worse. In addition, there are still many applications currently that do not support landscape display. In this case, the size of the virtual window on the large screen side is specified, and cannot be extended for full screen display. Consequently, viewing and operating experience of the user is poor. It can be learned that, in the multi-screen collaboration function in the related technology, the display window cannot be adapted to a size of a display screen of a projection-to device, and viewing and operating experience of the user is poor.

To resolve the foregoing problem, an embodiment of this application provides a screen projection method. A first electronic device may determine, based on resolution of a display screen and an attribute indicating whether landscape/portrait is supported that are of a second electronic device, a display layout and a direction that are of the second electronic device in full screen display, and adjust a currently displayed first interface based on the display layout and the direction. When the first electronic device projects an adjusted first interface to the second electronic device, the second electronic device may re-draw and display the first interface based on the display layout and the direction. This can ensure that a projection-to interface is adapted to a size of a display of a projection-to device, and improve viewing and operating experience of a user.

With reference to the hardware structure of the electronic device 100 shown in FIG. 1, the following describes in detail the screen projection method provided in this embodiment of this application. In this embodiment of this application, an example in which the first electronic device is projected to the second electronic device is used for description. To be specific, the first device is a projection-from device or a source device, and the second device is a projection-to device or a target device. The first electronic device and/or the second electronic device each may be the electronic device 100 shown in FIG. 1.

It should be noted that the screen projection method in this embodiment of this application may be applied to any application. In this embodiment of this application, a video application and a camera application are mainly used as an example for description. When the method provided in this embodiment of this application is applied to another application, an implementation of the method is similar to that of the video application and the camera application. Details are not described herein.

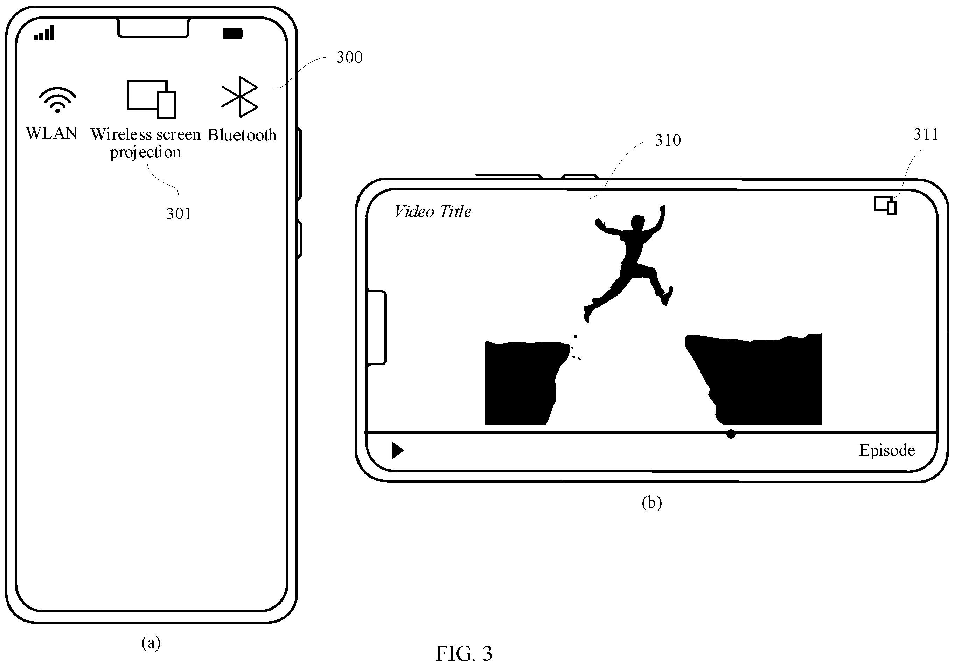

For example, as shown in (a) in FIG. 3, a user interface 300 is displayed on a display screen of the first electronic device, and the user interface 300 is a notification bar interface. The user interface 300 includes a "wireless screen projection" switch 301. In addition, the user interface 300 may further include another function switch, for example, a wireless local area network (wireless local area network, WLAN) switch and a Bluetooth switch. Further as shown in (b) in FIG. 3, a user interface 310 is displayed on a display screen of the first electronic device, and the user interface 310 is an application interface (for example, a video playback interface) of a current operation of the user. The user interface 310 includes a "wireless screen projection" button 311. In addition, the user interface 310 may further include a video title, a video play pause button, an episode selection button, and the like.

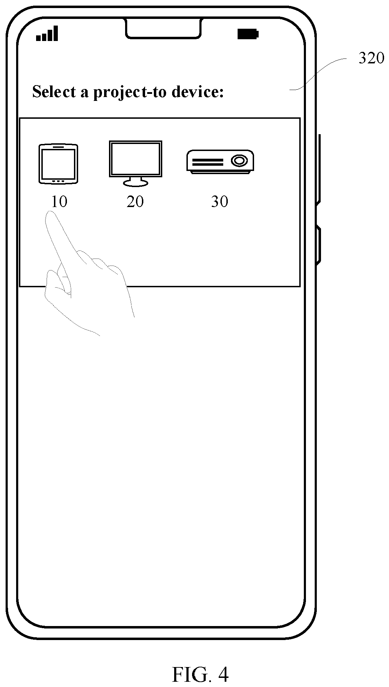

As shown in FIG. 4, the first electronic device may display a user interface 320 on the display screen in response to a first operation. The first operation may be an operation (for example, a touch operation) on the "wireless screen projection" switch 301 or the "wireless screen projection" button 311, or may be an operation for a voice instruction (for example, "start screen projection") of the user, or may be a shortcut gesture operation (for example, sliding down with three fingers).

For example, after the first electronic device responds to the first operation, a processor of the first electronic device may obtain an identifier of an electronic device that is around the first electronic device and that supports a screen projection function, and display a user interface 320 on the display screen. The user interface 320 includes the identifier of the electronic device that is around the first electronic device and that supports the screen projection function, for example, includes an electronic device 10, an electronic device 20, and an electronic device 30. The electronic device that is around the first electronic device and that supports the screen projection function includes an electronic device that supports the screen projection function and that is located in a same local area network as the first electronic device, and an electronic device that supports the screen projection function and that is connected to the first electronic device through NFC.

The first electronic device may determine, in response to a second operation, the second electronic device selected by the user, and the first electronic device determines to project content displayed on the display screen of the first electronic device to the second electronic device. The second operation may be an operation on an identifier of an electronic device displayed on the user interface 320. For example, when the user performs a touch operation on the electronic device 10, the first electronic device determines the electronic device 10 as the second electronic device, and determines to project a screen to the electronic device 10.

The screen projection method provided in this embodiment of this application is applicable to both an application that supports landscape display (referring to scenario 1) and an application that does not support landscape display (referring to scenario 2). Details are described below.

Scenario 1: For the application that supports landscape display, the video application is used as an example for description. The first electronic device displays, based on a first display style of a first display screen of the first electronic device, the video playback interface shown in (b) in FIG. 3. The first electronic device projects the video playback interface shown in (b) in FIG. 3 to the second electronic device.

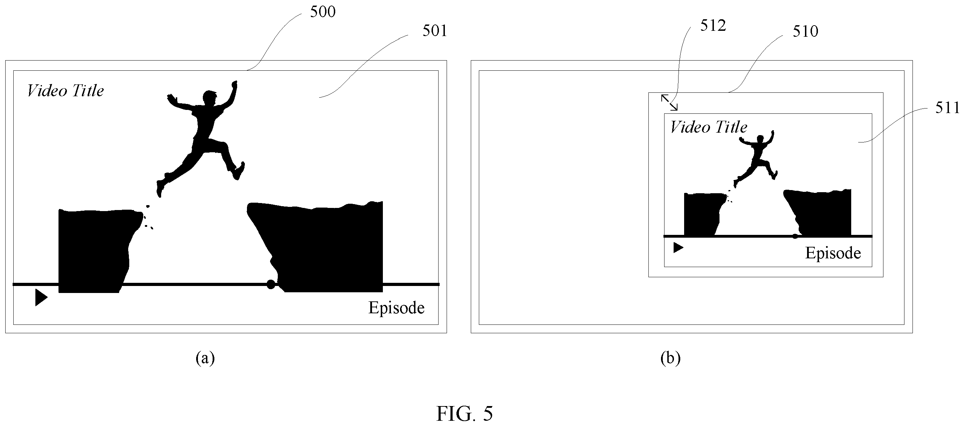

In a possible embodiment, when the first electronic device sends the video playback interface to the second electronic device, the second electronic device directly displays, in full screen, a virtual window 500 shown in (a) in FIG. 5, and the virtual window displays the video playback interface 501.

In this embodiment, after receiving the video playback interface, the second electronic device obtains second display screen information of a second display screen of the second electronic device, and sends the second display screen information to the first electronic device. The first electronic device determines a second display style of the second electronic device in full screen display based on the second display screen information. The first electronic device sends the second display style to the second electronic device. The second electronic device displays the video playback interface in full screen based on the second display style.

In another possible embodiment, when the first electronic device sends the video playback interface to the second electronic device, the second electronic device displays a virtual window 510 shown in (b) in FIG. 5, and the virtual window 510 displays the video playback interface 511 and further displays a full screen button 512. The second electronic device may display, in full screen in response to a third operation on the full screen button 512, the virtual window 500 shown in (a) in FIG. 5.

In this embodiment, the second electronic device may first receive the third operation, then obtain the second display screen information, and then display the video playback interface in full screen based on the second display style. Alternatively, the second electronic device may first obtain the second display screen information, receive the second display style, then receive the third operation, and then display the video playback interface in full screen based on the second display style.

It can be learned that when displaying the video playback interface in full screen, the second electronic device not only can display a video image on the video playback interface in the entire window for full screen display, but also refresh a layout of a font and the button displayed on the video playback interface, which is more beautiful than a layout during direct zoom-in display, and also more conforms to an operation habit of the user.

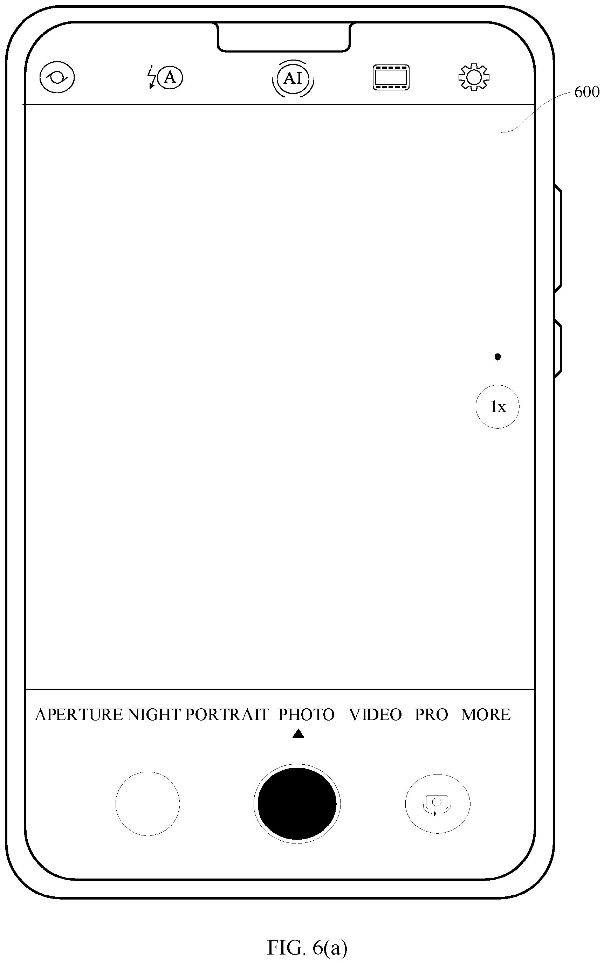

Scenario 2: For the application that does not support landscape display, the camera application is used as an example for description. The first electronic device displays, based on the first display style of the first display screen of the first electronic device, a photographing interface 600 shown in FIG. 6(a). The first electronic device projects the photographing interface 600 shown in FIG. 6(a) to the second electronic device.

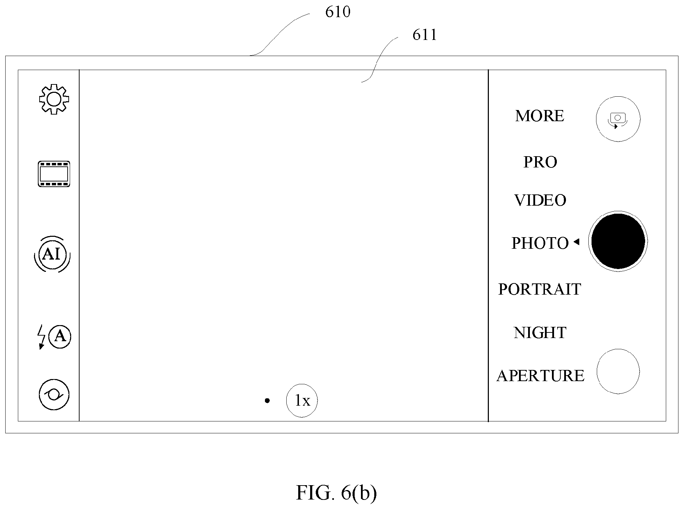

In a possible embodiment, when the first electronic device sends the photographing interface 600 to the second electronic device, the second electronic device directly displays, in full screen, a virtual window 610 shown in FIG. 6(b), and the virtual window displays the photographing interface 611.

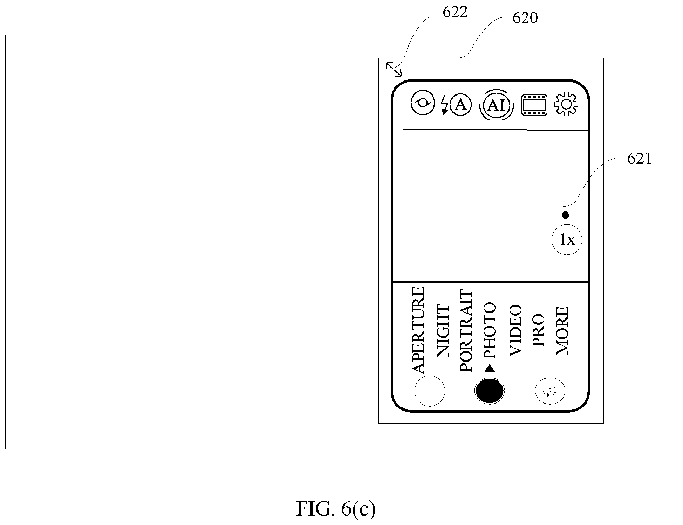

In another possible embodiment, when the first electronic device sends the photographing interface 600 to the second electronic device, the second electronic device displays a virtual window 620 shown in FIG. 6(c), and the virtual window 620 displays the photographing interface 621 and further displays a full screen button 622. The second electronic device may display, in full screen in response to a fourth operation on the full screen button 622, the virtual window 610 shown in FIG. 6(b).

It can be learned that, for the camera application that does not support landscape display, a layout of the photographing interface is refreshed, so that the photographing interface can be displayed in full screen. This improves viewing and operating experience of the user.

It can be understood that the screen projection method in this embodiment of this application is applicable to a scenario in which a small screen side is projected to a large screen side, and is also applicable to a scenario in which a large screen side is projected to a small screen side, a small screen side is projected to another small screen side, and a large screen side is projected to another large screen side. In this embodiment of this application, the scenario in which the small screen side is projected to the large screen side is mainly used as an example for description. For another scenario, refer to the scenario in which the small screen side is projected to the large screen side. Details are not described herein again.

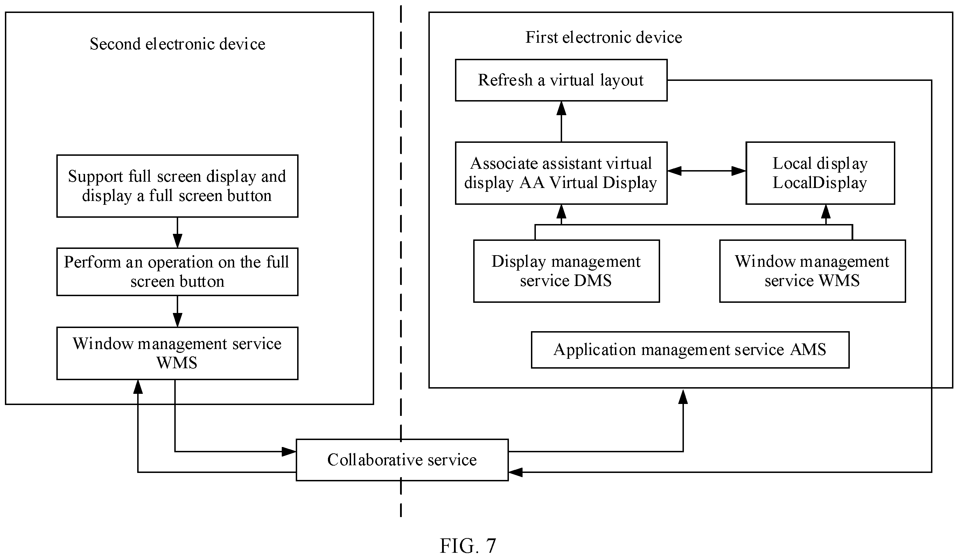

The screen projection method provided in this embodiment of this application may be applied to a screen projection system, and the screen projection system includes a first electronic device and a second electronic device. Certainly, the screen projection system may further include more other electronic devices, for example, a third electronic device. FIG. 7 is a schematic diagram of a possible architecture of a screen projection system according to an embodiment of this application. The screen projection system includes the first electronic device and the second electronic device, and screen projection is completed between the first electronic device and the second electronic device by using a multi-screen collaboration service.

The second electronic device includes a WMS. The second electronic device supports full screen display, and a full screen button is displayed on a second display screen of the second electronic device. When an operation is performed on the full screen button, the WMS of the second electronic device may obtain second display screen information of the second display screen of the second electronic device. The second electronic device may send the second display screen information to the first electronic device based on the multi-screen collaboration service. A function of the WMS of the second electronic device may be implemented by a processor of the second electronic device.

The first electronic device includes a DMS, an AMS, and a WMS. The DMS, the AMS, and the WMS that are of the first electronic device are used to be responsible for creating, managing, and refreshing a real window displayed by the first electronic device. For example, the DMS of the first electronic device is responsible for managing a first display style of the real window of the first electronic device, and the first display style may be referred to as a local display (LocalDisplay) style of the first electronic device. The AMS of the first electronic device is used to manage an application (or an interface of the application) of the first electronic device. The WMS of the first electronic device is used to determine that the real window is displayed on a first display screen of the first electronic device based on the LocalDisplay, and the real window includes a first application interface. Functions of the DMS, the AMS, and the WMS that are of the first electronic device may be implemented by a processor of the first electronic device.

The first electronic device may further receive the second display screen information of the second display screen of the second electronic device based on the multi-screen collaboration service. The first electronic device may determine, based on the second display screen information, a second display style of the second electronic device in full screen display, and the second display style may be referred to as AA Virtual Display of the second electronic device.

The first electronic device may send the AA Virtual Display to the second electronic device based on the multi-screen collaboration service. A virtual window is displayed on the second display screen of the second electronic device in full screen based on the AA Virtual Display, and the virtual window includes the first application interface.

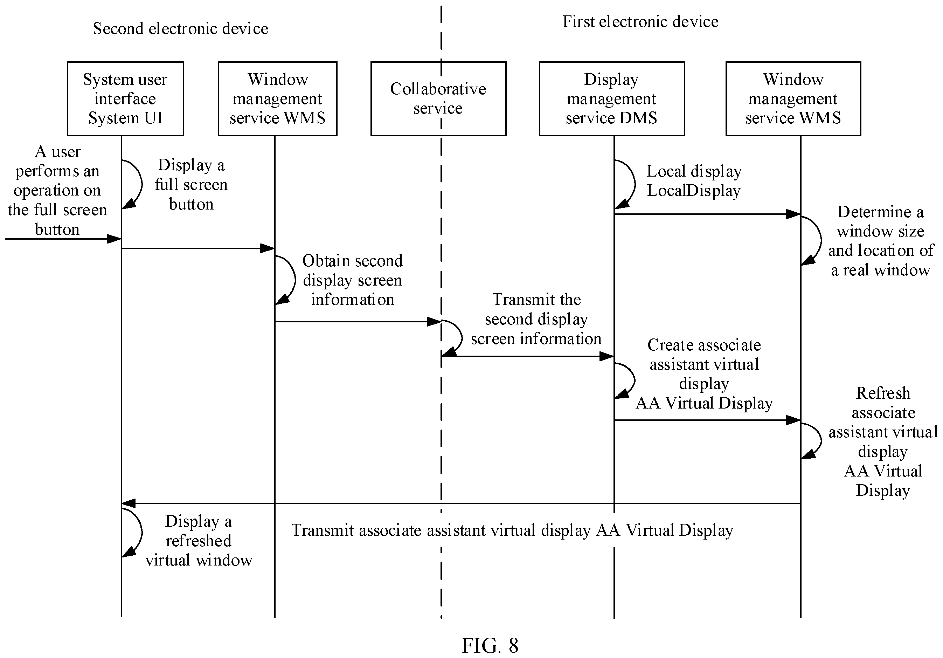

FIG. 8 is a schematic diagram of a possible screen projection procedure according to an embodiment of this application. The screen projection procedure may be applied to the screen projection system shown in FIG. 7, and includes the following steps:

A first electronic device displays a real window on a first display screen, where the real window includes a first application interface.

A DMS of the first electronic device determines LocalDisplay (that is, a first display style) of the first electronic device, and a WMS of the first electronic device determines a window size and location of the real window based on the LocalDisplay. An AMS of the first electronic device displays the first application interface in the real window based on the window size and location of the real window.

The first electronic device sends the first application interface to a second electronic device based on a multi-screen collaboration service.

The second electronic device displays a first virtual window on a second display screen, where the first virtual window includes the first application interface and a full screen button.

The first virtual window is a mirror image of the real window, that is, a window size of the first virtual window is the same as that of the real window.

The second electronic device receives an instruction of tapping the full screen button displayed on the second display screen by the user.

It can be understood that, in addition to the tap operation, an operation performed by the user on the full screen button may be another operation, for example, a press operation or a double-tap operation.

The WMS of the second electronic device obtains second display screen information of the second display screen. The second display screen information includes at least one of the following: size information of the second display screen, resolution of the second display screen, and a landscape/portrait attribute of the second display screen.

A gravity sensor of the second electronic device may obtain the landscape/portrait attribute of the second display screen, and determine whether the second display screen is currently in landscape display or portrait display. The landscape/portrait attribute of the second display screen may be used to determine whether a second virtual window on the second display screen is in landscape display or portrait display, and the second virtual window is a virtual window of the second electronic device in full screen display.

The size information of the second display screen and the resolution of the second display screen may be used to determine a layout and resolution of the second electronic in full screen display.

The second electronic device sends the second display screen information to the first electronic device based on the multi-screen collaboration service.

The first electronic device creates AA Virtual Display of the second electronic device in full screen display.

The first electronic device refreshes the AA Virtual Display based on the LocalDisplay and the display screen information.

Optionally, the first electronic device refreshes the AA Virtual Display based on the LocalDisplay, the display screen information, and an identifier of an audio/video collection device, where the identifier of the audio/video collection device is an identifier of the first electronic device or an identifier of the second electronic device. Herein, if an audio/video is collected in a screen projection process, both the first electronic device and the second electronic device may collect the audio/video. Therefore, the user may choose to collect the audio/video by the first electronic device or collect the audio/video by the second electronic device. The first electronic device may determine that which electronic device is selected by the user as the audio/video collection device, that is, determine whether the first electronic device collects the audio/video or the second electronic device collects the audio/video. Herein, a landscape/portrait attribute of an image collection device is considered, so that it can be ensured that the second electronic device subsequently displays a user interface for the user in a forward direction.

In this embodiment of this application, to ensure that a user interface viewed by the user on the second electronic device is in the forward direction, a landscape/portrait orientation and a size of the AA Virtual Display need to be consistent with the landscape/portrait attribute and a size of the second display screen. Herein, an example in which the first electronic device is a small screen device and the second electronic device is a large screen device is still used for description. Generally, if the second electronic device is the large screen device, the second display screen of the second electronic device is placed in landscape. Certainly, a possibility that the second display screen is placed in portrait is not excluded. However, the small screen device may be displayed in landscape or in portrait as holding of the user changes. A display direction of a camera of the audio/video collection is affected by a physical direction of the audio/video collection device and a landscape/portrait orientation displayed by an application, and further affects final display of the second virtual window. Therefore, in this embodiment of this application, a negotiation policy between the AA Virtual Display and the LocalDisplay is further formulated, to negotiate a final display style of the second virtual window. The negotiation policy is described in detail in the following.

The first electronic device sends a refreshed AA Virtual Display to the second electronic device based on the multi-screen collaboration service.

The AA Virtual Display herein is an AA Virtual Display refreshed in S808.

The second electronic device displays the second virtual window on the second display screen in full screen based on the AA Virtual Display, where the second virtual window displays the first application interface.

The AA Virtual Display herein is the AA Virtual Display refreshed in S808.

It can be understood that, when the second display information does not change and an application displayed by the first electronic device does not change, the second electronic device may always display another application interface based on the AA Virtual Display.

If either of the second display information and the application displayed by the first electronic device changes, the screen projection procedure shown in FIG. 8 may be re-executed.

Here is a detailed description of the negotiation policy between the AA Virtual Display and the LocalDisplay.

First, a native policy of a camera in an Android^{®} operating system is described. In this embodiment of this application, an electronic device using the Android^{®} operating system is referred to as an Android^{®} device for short.

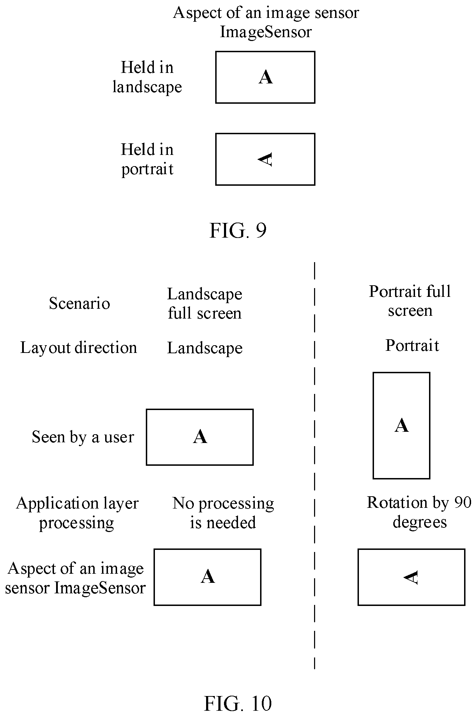

(1) When the Android^{®} device is held in landscape and portrait, because an imaging scanning direction of an image sensor (ImageSensor) is fixed, a final aspect direction of the image sensor may not be the same as a physical direction of the Android^{®} device. An image sensor of a rear-facing camera is used as an example for description. As shown in FIG. 9, when the Android^{®} device is held in landscape, an aspect direction of the image sensor is a forward direction, that is, a forward direction for viewing by a user. When the Android^{®} device is held in portrait, an aspect direction of the image sensor needs to be clockwise rotated by 90 degrees to ensure that the user can view an image in the forward direction, that the aspect direction of the image sensor is anticlockwise rotated by 90 degrees.

(2) Based on (1), it further needs to consider a landscape/portrait orientation of an application for the application during display, to ensure that the application can implement forward display regardless of an aspect of the image sensor. The rear-facing camera is still used as an example. As shown in FIG. 10, when the application is in a landscape mode, an aspect direction of the image sensor is the forward direction, and there is no need to perform a rotation operation at an application layer to ensure that a direction seen by the user is the forward direction. When the application is in a portrait mode, an aspect direction of the image sensor is anticlockwise rotated by 90 degrees, and it needs to clockwise rotate by 90 degrees at the application layer on a basis of an aspect of the image sensor, to ensure that the direction seen by the user is the forward direction.

The negotiation policy between the AA Virtual Display and the LocalDisplay is shown in Table 1 below. Herein, an example in which the first electronic device is the small screen device, the second electronic device is the large screen device, and the large screen device is placed in landscape is still used for description. The following scenarios are included:

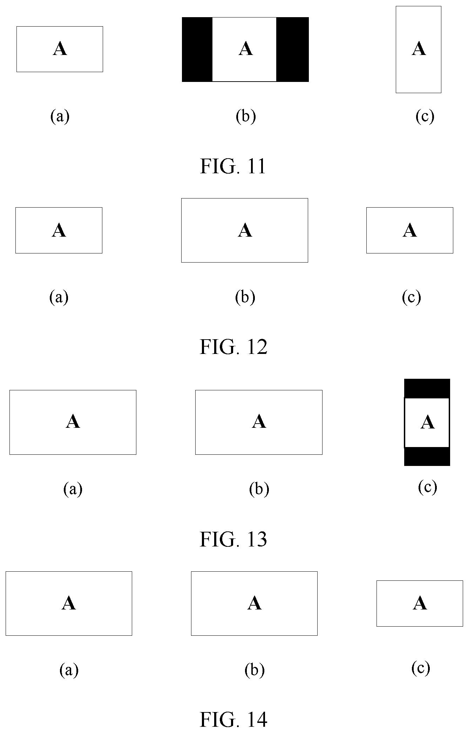

Scenario 1: The small screen device is the audio/video collection device, and the small screen device is held in portrait. An aspect direction of an image sensor of the small screen device is shown in (a) in FIG. 11. LocalDisplay of the small screen device specifies that application display is portrait display, and AA Virtual Display of the large screen device specifies that application display is landscape display.

The LocalDisplay is portrait display. It can be learned from (2) that the application itself has a rotation policy and application display is in the forward direction after rotation. Therefore, no additional rotation is required herein, and final display of the small screen device is shown in (c) in 11.

The AA Virtual Display is landscape display, but the application in the large screen device has no rotation capability. Therefore, a multicast source discovery protocol (multicast source discovery protocol, MSDP) needs to be used to supplement rotation. The MSDP may be used to clockwise rotate by 90 degrees on the basis of the aspect direction of the image sensor. After rotation, application display is in the forward direction, and resolution of the application needs to be refreshed based on a size of a display screen of the large screen device. Final display of the large screen device is shown in (b) in FIG. 11.

Scenario 2: The small screen device is the audio/video collection device, and the small screen device is held in landscape. The aspect direction of the image sensor of the small screen device is shown in (a) in FIG. 12. LocalDisplay of the small screen device specifies that application display is landscape display, and AA Virtual Display of the large screen device specifies that application display is landscape display.

The LocalDisplay is landscape display. It can be learned from (2) that the aspect direction of the image sensor is the forward direction. Therefore, no additional rotation is required herein. Final display of the small screen device is shown in (c) in FIG. 12.

The AA Virtual Display is landscape display, and the aspect direction of the image sensor is the forward direction. Therefore, no additional rotation is required herein. However, resolution of the application needs to be refreshed based on the size of the display screen of the large screen device. Final display of the large screen device is shown in (b) in FIG. 12.

Scenario 3: The large screen device is the audio/video collection device, and the small screen device is held in portrait. The aspect direction of the image sensor of the large screen device is shown in (a) in FIG. 13. LocalDisplay of the small screen device specifies that application display is portrait display, and AA Virtual Display of the large screen device specifies that application display is landscape display.

The LocalDisplay is portrait display. It can be learned from (2) that the application has a rotation policy but performs redundant rotation. Therefore, an MSDP service needs to be used to supplement rotation. The MSDP may be used to anticlockwise rotate the application by 90 degrees on a basis of application rotation. After rotation, an application display mode is the forward direction. Final display of the small screen device is shown in (c) in FIG. 13.

The AA Virtual Display is landscape display, and the aspect direction of the image sensor is the forward direction. Therefore, no additional rotation is required herein. However, the resolution of the application needs to be refreshed based on the size of the display screen of the large screen device. Final display of the large screen device is shown in (b) in FIG. 13.

Scenario 4: The large screen device is the audio/video collection device, and the small screen device is held in landscape. The aspect direction of the image sensor of the large screen device is shown in (a) in FIG. 14. LocalDisplay of the small screen device specifies that application display is landscape display, and AA Virtual Display of the large screen device specifies that application display is landscape display.

The LocalDisplay is landscape display. It can be learned from (2) that the aspect direction of the image sensor is the forward direction. Therefore, no additional rotation is required herein. Final display of the small screen device is shown in (c) in FIG. 14.

The AA Virtual Display is landscape display, and the aspect direction of the image sensor is the forward direction. Therefore, no additional rotation is required herein. However, the resolution of the application needs to be refreshed based on the size of the display screen of the large screen device. Final display of the large screen device is shown in (b) in FIG. 14.

**Table 1**

| Scenario | | | Aspect of an image sensor | Application direction | Negotiation Policy | Final display of a large screen device | Final display of a small screen device |
|---|---|---|---|---|---|---|---|
| 1 2 | The small screen device is an audio/video collection device | The small screen device is held in portrait | As shown in (a) in FIG. 11 | LocalDisplay: portrait; and AA Virtual Display: landscape | The LocalDisplay is in portrait, and an application is displayed in a forward direction after being rotated based on a policy; and the AA Virtual Display is in landscape, and an application cannot rotate, and therefore, an MSDP service needs to be used to supplement clockwise rotation by 90 degrees, and a display resolution of the application needs to be refreshed based on a size of a display screen of the large screen device | As shown in (b) in FIG. 11 | As shown in (c) in FIG. 11 |
| | | The small screen device is held in landscape | As shown in (a) in FIG. 12 | LocalDisplay: landscape; and AA Virtual Display: landscape | An aspect direction of an image sensor is the forward direction; and therefore, the LocalDisplay and the AA Virtual Display do not need to be rotated; and a display resolution of the application in the AA Virtual Display needs to be refreshed based on the size of the display screen of the large screen device | As shown in (b) in FIG. 12 | As shown in (c) in FIG. 12 |
| 3 | The large screen device is an audio/video device | The small screen device is held in portrait | As shown in (a) in FIG. 13 | LocalDisplay: portrait; and AA Virtual Display: landscape | The LocalDisplay is in portrait, and the MSDP service needs to be used to supplement anticlockwise rotation by 90 degrees; and the AA Virtual Display is in landscape, the application is displayed in the forward direction after being | As shown in (b) in FIG. 13 | As shown in (c) in FIG. 13 |
| 4 | | | | | rotated based on the policy, and a display resolution of the application needs to be refreshed based on the size of the display screen of the large screen device | | |
| | | The small screen device is held in landscape | As shown in (a) in FIG. 14 | LocalDisplay: landscape; and AA Virtual Display: landscape | The aspect direction of the image sensor is the forward direction; and therefore, the LocalDisplay and the AA Virtual Display do not need to be rotated; and the display resolution of the application in the AA Virtual Display needs to be refreshed based on the size of the display screen of the large screen device | As shown in (b) in FIG. 14 | As shown in (c) in FIG. 14 |

It can be learned that, during cross-device collaboration in this embodiment of this application, the negotiation policy is formulated, so that regardless of whether the small screen side is held in landscape or held in portrait, both the small screen side and the large screen side can perform adaptive display based on the size, the landscape/portrait orientation, and the resolution of the display screen. Especially, when the small screen side is projected to the large screen side, the display window on the large screen side can be fully covered in full screen display, regardless of whether the application is a self-developed application or a third-party application, or an application that supports landscape display or does not support landscape display. In addition, display ratios of a font and a button are normal, and a window layout is more beautiful. This improves viewing and operating experience of the user.

With reference to the foregoing embodiments and the accompanying drawings, an embodiment of this application provides a screen projection method. The method may be implemented in the electronic device 100 having the hardware structure shown in FIG. 1.

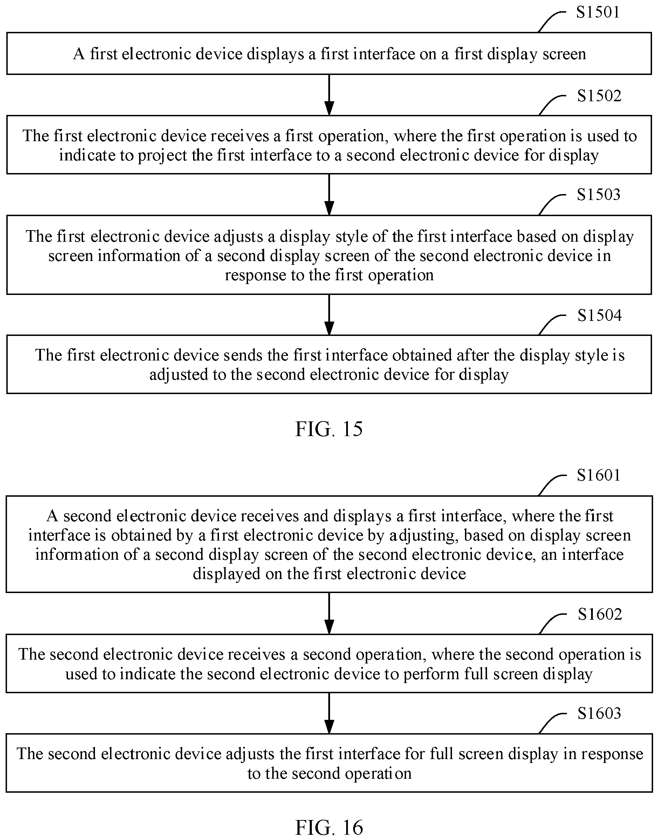

FIG. 15 is a schematic flowchart of a screen projection method according to an embodiment of this application. The method is applied to a first electronic device, and the first electronic device includes a first display screen. The method includes the following steps:
S1501: The first electronic device displays a first interface on the first display screen.
S1502: The first electronic device receives a first operation, where the first operation is used to indicate to project the first interface to a second electronic device for display.
S1503: The first electronic device adjusts a display style of the first interface based on display screen information of a second display screen of the second electronic device in response to the first operation.

The display screen information of the second display screen includes at least one of the following: size information of the second display screen, resolution of the second display screen, and a landscape/portrait attribute of the second display screen.

The first interface obtained after the display style is adjusted is a first interface obtained after a display page layout and/or a display direction are/is adjusted.

The display style that is of the first interface and that is adjusted by the first electronic device based on the display screen information of the second display screen may be a display style in which the first interface is displayed in full screen on the second display screen, or a display style in which the first interface is displayed in a specific percentage of full screen (for example, a first percentage, where the first proportion is greater than 0 and not greater than 1) on the second display screen, for example, a display style displayed in 60% full screen.

In some embodiments, that the first electronic device adjusts a display style of the first interface based on display screen information of a second display screen of the second electronic device includes: The first electronic device determines a first display style of the second electronic device in full screen display based on the display screen information of the second display screen; and the first electronic device adjusts the first interface based on the first display style.

That the first electronic device determines a first display style of the second electronic device in full screen display based on the display screen information of the second display screen includes:

The first electronic device determines the first display style of the second electronic device in full screen display based on the display screen information of the second display screen and a landscape/portrait attribute of an electronic device collecting an audio/video.

For example, when the second electronic device is in landscape, that the first electronic device determines the first display style of the second electronic device in full screen display based on the display screen information of the second display screen and a landscape/portrait attribute of an electronic device collecting an audio/video includes:
if the electronic device collecting an audio/video is the first electronic device and the first electronic device is in portrait, rotating a display direction of the first interface clockwise by a first angle, and adjusting resolution of the first interface based on a size and the resolution that are of the second display screen;
if the electronic device collecting an audio/video is the first electronic device and the first electronic device is in landscape, adjusting the resolution of the first interface based on the size and the resolution that are of the second display screen, and optionally, keeping the display direction of the first interface unchanged; or
if the electronic device collecting an audio/video is the second electronic device, adjusting the resolution of the first interface based on the size and the resolution that are of the second display screen, and optionally, keeping the display direction of the first interface unchanged (when an application has a rotation capability) or rotating clockwise by a third angle (when the application has no rotation capability).

For example, when the second electronic device is in portrait, that the first electronic device determines the first display style of the second electronic device in full screen display based on the display screen information of the second display screen and a landscape/portrait attribute of an electronic device collecting an audio/video includes:
if the electronic device collecting an audio/video is the first electronic device and the first electronic device is in portrait, adjusting the resolution of the first interface based on the size and the resolution that are of the second display screen, and optionally, keeping the display direction of the first interface unchanged;
if the electronic device collecting an audio/video is the first electronic device and the first electronic device is in landscape, rotating the display direction of the first interface clockwise by a fourth angle, and adjusting the resolution of the first interface based on the size and the resolution that are of the second display screen; or
if the electronic device collecting an audio/video is the second electronic device, adjusting the resolution of the first interface based on the size and the resolution that are of the second display screen, and optionally, keeping the display direction of the first interface unchanged (when the application has the rotation capability) or rotating clockwise by a fifth angle (when the application has no rotation capability).

In some embodiments, the first electronic device may further determine a second display style of the first electronic device in display based on the landscape/portrait attribute of the electronic device collecting an audio/video, and the first electronic device displays the first interface based on the second display style.

For example, that the first electronic device may further determine a second display style of the first electronic device in display based on the landscape/portrait attribute of the electronic device collecting an audio/video includes:
if the electronic device collecting an audio/video is the first electronic device and the first electronic device is in landscape or portrait, the first electronic device may keep a current display style of the first interface unchanged;
if the electronic device collecting an audio/video is the second electronic device, the second electronic device is in landscape, and the first electronic device is in landscape, the first electronic device may keep the current display style of the first interface unchanged;
if the electronic device collecting an audio/video is the second electronic device, the second electronic device is in landscape, and the first electronic device is in portrait, rotating the display direction of the first interface anticlockwise by a second angle;
if the electronic device collecting an audio/video is the second electronic device, the second electronic device is in portrait, and the first electronic device is in portrait, the first electronic device may keep the current display style of the first interface unchanged; or
if the electronic device collecting an audio/video is the second electronic device, the second electronic device is in portrait, and the first electronic device is in landscape, rotating the display direction of the first interface anticlockwise by a sixth angle (when the application has the rotation capability), or keeping the current display direction of the first interface unchanged (when the application has no rotation capability).

S1504: The first electronic device sends the first interface obtained after the display style is adjusted to the second electronic device for display.

FIG. 16 is another schematic flowchart of a screen projection method according to an embodiment of this application. The method is applied to a second electronic device, and the second electronic device includes a second display screen. The method includes the following steps:

S1601: The second electronic device receives and displays a first interface, where the first interface is obtained by a first electronic device by adjusting, based on display screen information of the second display screen of the second electronic device, an interface displayed on the first electronic device.

S1602: The second electronic device receives a second operation, where the second operation is used to indicate the second electronic device to perform full screen display.

An execution sequence of S1601 and S1602 is not limited herein.

S1603: The second electronic device adjusts the first interface for full screen display in response to the second operation.

Optionally, before the second electronic device receives and displays the first interface obtained after display is adjusted, the second electronic device may further obtain the display screen information of the second display screen, and the second electronic device sends the display screen information of the second display screen to the first electronic device.

For specific implementations of the methods shown in FIG. 15 and FIG. 16 in the embodiments of this application, refer to descriptions of the foregoing related embodiments.

The embodiments in this application may be used in combination, or may be used separately.

In the foregoing embodiments provided in this application, the method provided in embodiments of this application is described from a perspective of an electronic device serving as an execution body. To implement the functions in the method provided in the foregoing embodiments of this application, the electronic device may include a hardware structure and/or a software module, to implement the functions in a form of the hardware structure, the software module, or a combination of the hardware structure and the software module. Whether a function in the foregoing functions is performed in a form of a hardware structure, a software module, or a hardware structure and a software module depends on particular applications and design constraints of the technical solutions.

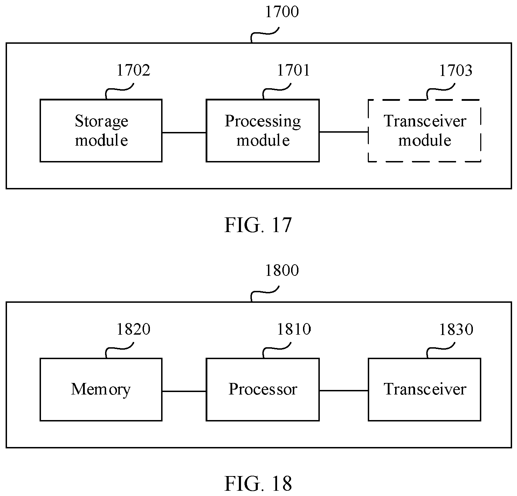

Based on a same concept, FIG. 17 shows an electronic device 1700 according to this application, which is configured to perform the screen projection method shown in FIG. 15 or FIG. 16. The electronic device 1700 may be a first electronic device or a second electronic device. For example, the electronic device 1700 includes a processing module 1701 and a storage module 1702. One or more computing programs are stored in the storage module 1702, and are configured to be executed by the one or more processing modules 1701, to implement the screen projection method provided in this embodiment of this application. Optionally, the electronic device further includes a transceiver module 1703. For example, the transceiver module 1703 sends a first interface obtained after a display style is adjusted to the second electronic device.

Based on a same concept, FIG. 18 shows an electronic device 1800 according to this application. The electronic device 1800 includes at least one processor 1810, a memory 1820, and a transceiver 1830. The processor 1810 is coupled to the memory 1820 and the transceiver 1830. Couplings in the embodiments of this application are indirect couplings or communication connections between apparatuses, units, or modules, and may be implemented in electrical, mechanical, or other forms. The couplings are used for information exchange between the apparatuses, the units, or the modules. In this embodiment of this application, a connection medium among the transceiver 1830, the processor 1810, and the memory 1820 is not limited. For example, in this embodiment of this application, the memory 1820, the processor 1810, and the transceiver 1830 may be connected through a bus in FIG. 18. The bus may be classified into an address bus, a data bus, a control bus, and the like.

Specifically, the memory 1820 is configured to store program instructions.

The transceiver 1830 is configured to send or receive a first interface obtained after a display style is adjusted or the like.

The processor 1810 is configured to invoke the program instructions stored in the memory 1820, so that the device 1800 performs the screen projection method shown in FIG. 15 or FIG. 16.

In this embodiment of this application, the processor 1810 may be a general-purpose processor, a digital signal processor, an application-specific integrated circuit, a field programmable gate array or another programmable logic device, a discrete gate or a transistor logic device, or a discrete hardware component, and can implement or perform the methods, steps, and logical block diagrams disclosed in the embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In this embodiment of this application, the memory 1820 may be a nonvolatile memory, for example, a hard disk drive (hard disk drive, HDD) or a solid-state disk (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

It should be understood that the electronic device 1800 can be configured to implement the method shown in FIG. 15 or FIG. 16 in the embodiments of this application. For related features, refer to the foregoing descriptions. Details are not described herein again.

An embodiment of this application further provides a screen projection system, including a first electronic device performing the screen projection method and a second electronic device performing the screen projection method.

The first electronic device and the second electronic device perform multi-screen collaboration with each other.

A person skilled in the art may clearly understand that the embodiments of this application may be implemented by hardware, firmware, or a combination thereof. When this application is implemented by software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a computer. This is used as an example but is not limited to: a computer-readable medium such as a RAM, a ROM, an electrically erasable programmable read only memory (electrically erasable programmable read only memory, EEPROM), a compact disc read-only memory (compact disc read-Only memory, CD-ROM) or another optical disk storage, a magnetic disk storage medium or another magnetic storage device, or any other medium that can be used to carry or store expected program code in a form of an instruction or a data structure and that can be accessed by a computer. In addition, any connection may be properly defined as a computer-readable medium. For example, if software is transmitted from a website, a server, or another remote source by using a coaxial cable, an optical fiber and optical cable, a twisted pair, a digital subscriber line (digital subscriber line, DSL), or wireless technologies such as infrared, radio, and microwave, the coaxial cable, the optical fiber and optical cable, the twisted pair, the DSL, or the wireless technologies such as infrared, radio, and microwave are included in a definition of a medium to which the coaxial cable, the optical fiber and optical cable, the twisted pair, the DSL, or the wireless technologies such as infrared, radio, and microwave belong. As used in the embodiments of this application, a disk (disk) and a disc (disc) include a compact disc (compact disc, CD), a laser disc, an optical disc, a digital versatile disc (digital video disc, DVD), a floppy disk, and a Blu-ray disc, where the disk generally copies data magnetically, and the disc optically copies data by using a laser. The foregoing combination should also be included in the protection scope of the computer-readable medium.

In summary, the foregoing descriptions are merely embodiments of this application, and are not intended to limit the protection scope of this application. Any modification, equivalent replacement, and improvement made in accordance with the disclosure of this application shall be included in the protection scope of this application.

## Claims

1. A screen projection method, applied to a first electronic device, wherein the first electronic device comprises a first display screen, and the method comprises:
displaying, by the first electronic device, a first interface on the first display screen;
receiving, by the first electronic device, a first operation, wherein the first operation is used to indicate to project the first interface to a second electronic device for display;
adjusting, by the first electronic device, a display style of the first interface based on display screen information of a second display screen of the second electronic device in response to the first operation; and
sending, by the first electronic device, the first interface obtained after the display style is adjusted to the second electronic device for display.

2. The method according to claim 1, wherein the display screen information of the second display screen comprises at least one of the following: size information of the second display screen, resolution of the second display screen, and a landscape/portrait attribute of the second display screen.

3. The method according to claim 1 or 2, wherein the first interface obtained after the display style is adjusted is a first interface obtained after a display page layout and/or a display direction are/is adjusted.

4. The method according to any one of claims 1 to 3, wherein the adjusting, by the first electronic device, a display style of the first interface based on display screen information of a second display screen of the second electronic device comprises:
determining, by the first electronic device, a first display style of the second electronic device in full screen display based on the display screen information of the second display screen; and
adjusting, by the first electronic device, the first interface based on the first display style.

5. The method according to claim 4, wherein the determining, by the first electronic device, a first display style of the second electronic device in full screen display based on the display screen information of the second display screen comprises:
determining, by the first electronic device, the first display style of the second electronic device in full screen display based on the display screen information of the second display screen and a landscape/portrait attribute of an electronic device collecting an audio/video.

6. The method according to claim 5, wherein when the second electronic device is in landscape, the determining, by the first electronic device, the first display style of the second electronic device in full screen display based on the display screen information of the second display screen and a landscape/portrait attribute of an electronic device collecting an audio/video comprises:
if the electronic device collecting an audio/video is the first electronic device and the first electronic device is in portrait, rotating a display direction of the first interface clockwise by a first angle, and adjusting resolution of the first interface based on a size and the resolution that are of the second display screen;
if the electronic device collecting an audio/video is the first electronic device and the first electronic device is in landscape, adjusting the resolution of the first interface based on the size and the resolution that are of the second display screen; or
if the electronic device collecting an audio/video is the second electronic device, adjusting the resolution of the first interface based on the size and the resolution that are of the second display screen.

7. The method according to any one of claims 1 to 6, further comprising:
determining, by the first electronic device, a second display style of the first electronic device in display based on the landscape/portrait attribute of the electronic device collecting an audio/video; and
adjusting, by the first electronic device, the first interface based on the second display style.

8. The method according to claim 7, wherein the determining, by the first electronic device, a second display style of the first electronic device in display based on the landscape/portrait attribute of the electronic device collecting an audio/video comprises:
if the electronic device collecting a video is the second electronic device, the second electronic device is in landscape, and the first electronic device is in portrait, rotating the display direction of the first interface anticlockwise by a second angle.

9. A screen projection method, applied to a second electronic device, wherein the second electronic device comprises a second display screen, and the method comprises:
receiving and displaying, by the second electronic device, a first interface, wherein the first interface is obtained by a first electronic device by adjusting, based on display screen information of the second display screen of the second electronic device, an interface displayed on the first electronic device;
receiving, by the second electronic device, a second operation, wherein the second operation is used to indicate the second electronic device to perform full screen display; and
adjusting, by the second electronic device, the first interface for full screen display in response to the second operation.

10. The method according to claim 9, wherein before the receiving and displaying, by the second electronic device, a first interface, the method further comprises:
obtaining, by the second electronic device, the display screen information of the second display screen; and
sending, by the second electronic device, the display screen information of the second display screen to the first electronic device.

11. An electronic device, comprising a display screen and at least one processor, wherein the at least one processor is coupled to at least one memory;
the display screen is configured to display an interface; and
the at least one processor is configured to execute a computer program or instructions stored in the at least one memory, to enable the electronic device to perform the method according to any one of claims 1 to 8 or perform the method according to claim 9 or 10.

12. An electronic device, comprising a processor and an interface circuit, wherein
the interface circuit is configured to receive code instructions and transmit the code instructions to the processor; and
the processor is configured to run the code instructions to perform the method according to any one of claims 1 to 8 or perform the method according to claim 9 or 10.

13. A chip, wherein the chip is coupled to a memory in an electronic device, so that the chip invokes, when running, a computer program stored in the memory, to implement the method according to any one of claims 1 to 8 or implement the method according to claim 9 or 10.

14. A computer storage medium, wherein the computer-readable storage medium comprises a computer program, and when the computer program is run on an electronic device, the electronic device is enabled to perform the method according to any one of claims 1 to 8 or perform the method according to claim 9 or 10.

15. A screen projection system, comprising a first electronic device performing the method according to any one of claims 1 to 8, and a second electronic device performing the method according to claim 9 or 10.
